# EUROPEAN PATENT APPLICATION

(11) **EP 4 813 503 A1**
(43) Date of publication of application: **30.09.2026**
(21) Application number: 25166598.0
(22) Date of filing: 27.03.2025
(51) Int. Cl.: B01D 53/22, C10L 3/10, B01D 71/02

(54) **PROCESS FOR SEPARATING CO2 FROM NATURAL GAS**

(71) Applicant: Petroleo Brasileiro S.A. - Petrobras, 20031-912 Rio de Janeiro (BR)
(72) Inventor: DA COSTA AMARAL, Marcelo, 21941-915 Rio de Janeiro (BR); FERREIRA DE SOUZA, Andre Felipe, 21941-915 Rio de Janeiro (BR); MARTINS RAPOSO, Gelmirez, 20231-030 Rio de Janeiro (BR); DE BARROS, Mario Augusto, 21941-915 Rio de Janeiro (BR); SOARES DA SILVA, Fabricio, 21941-915 Rio de Janeiro (BR)
(74) Representative: Clarke, Modet y Cía., S.L.

(57) **Abstract**

The present invention relates to the process for separating CO₂ from natural gas by using a membrane with greater selectivity for methane than for CO₂. The inverted membrane produces a permeate with a low CO₂ content, which will be used as fuel gas, thus reducing the energy demand of the CO₂ reinjection system, since the stream with a high CO₂ content will remain at a high pressure.

## Description

### FIELD OF THE INVENTION

The present invention relates to a method for separating carbon dioxide from natural gas by using a membrane with greater selectivity for methane than for CO₂, hereinafter referred to as an inverted membrane.

The invention is applicable to oil and associated gas production fields, designed for operation in the total gas reinjection mode, i.e., without export, with CO₂ contents above 40% molar.

### BACKGROUNDS OF THE INVENTION

Currently, in the natural gas treatment system used on the platforms, it is common for the natural gas from the oil treatment system to be compressed, then passed through the dehydration system and, finally, sent to the hydrocarbon dew point control and acidic gas removal system to meet the requirements of the gas treatment membranes.

In general, the gas treatment process for CO₂ removal in total reinjection units, when the gas content is between approximately 10 and 75% CO₂, is the separation by using CO₂-selective polymeric membranes. The objective of this treatment is to generate a fuel gas stream with a low CO₂ content (in relation to the produced content) and, thus, reduce greenhouse gas emissions associated mainly with the exhaust of turbo generators.

The process with CO₂-selective membranes operates at approximately 25 bar to 80 bar (2500 kPa to 8000 kPa). This separation process generates two streams: the retentate, with a low CO₂ content ("poor" in CO₂) at the high inlet pressure; and the permeate, with a high CO₂ content ("rich" in CO₂) at low pressure. The retentate is used for fuel gas, while the permeate stream requires a huge energy expenditure for recompression for reinjection into the reservoir.

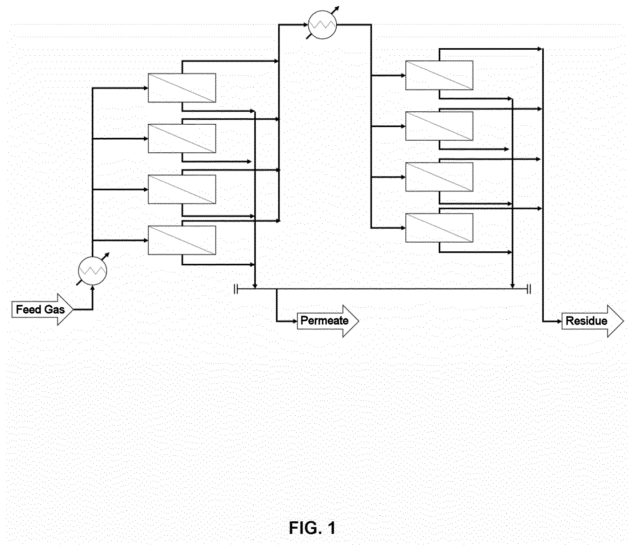

As an example of the state of the art, Figure 1 illustrates a CO₂ removal system consisting of a pre-membrane and a membrane, usually with an inlet and intermediate heater.

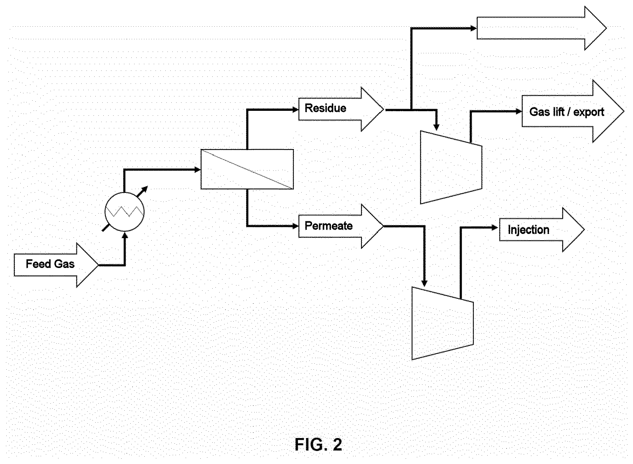

Since the membranes currently used are selective for CO₂, the CO₂ is preferably permeated (rich in CO₂ and at a low pressure) leaving the membrane system at a low pressure, around 4 bar (400 kPa), for subsequent compression and reinjection. The stream rich in natural gas and with a low CO₂ content leaves the membrane system ready for consumption as fuel gas or for export and gas lift, as shown in Figure 2.

### BACKGROUNDS OF THE INVENTION

The prior art discloses some documents using polymeric membranes with selectivity for CO₂ to the detriment of methane, among them:

Document BR 112018011305-0 refers to the purification of natural gas by using gas separation membranes. In this sense, the document discloses that the separation units include gas separation membrane units, including one or more membranes in parallel or in series, in which one of the units is selective for CO₂ to the detriment of methane. The membrane units of the document comprise a polymer or copolymer. However, the document does not describe the use of an inverse membrane with selectivity for methane to the detriment of CO₂ to separate CO₂ from natural gas.

Document US 6,565,631 describes that the invention includes a process for separating CO₂ from natural gas including: contacting a mixture of CO₂ and natural gas with a first side of a carbon membrane so as to cause a portion of the mixture to pass through the carbon membrane to a permeate side. The resulting mixture on the permeate side becomes enriched with CO₂ relative to the mixture on the first side. The carbon membrane includes an asymmetric hollow filamentary carbon membrane including a partial carbonization product of a symmetric hollow filament including an aromatic imide polymeric material. However, this invention does not describe the use of an inverse membrane with selectivity for methane to the detriment of CO₂ to separate CO₂ from natural gas.

One of the embodiments of documents BR 112012011483-2 and BR 122020006337-8 relates to a process for reducing the concentration of acidic gases in a natural gas stream that includes providing a carbon membrane. Another aspect of the invention is a process for optimizing the CO₂/CH₄ selectivity of a carbon membrane. As can be noted, the documents do not describe the process of the present invention that uses an inverse membrane for the separation of CO₂ from natural gas.

Document BR 112017013042-4 discloses membranes with different selectivities in different separation stages. However, it does not mention the preferential selectivity for CH₄ over CO₂.

Document WO 2018/236750 discloses that the compressed permeate can be circulated to the distillation unit. However, this separation is to obtain CO₂.

Document WO2016153958 discloses that, instead of sending the permeate streams or other by-product streams (such as NGL flash stream) to flare, the streams can be recovered for fuel. However, it says nothing about the permeate being selective for CH₄.

Document WO 2017/069990 describes the advantages and disadvantages of cellulose acetate membrane in the area of gas separation in a gas mixture, the document discloses that the cellulose acetate membranes still need improvement in a number of properties, including selectivity, performance durability, chemical stability, resistance to hydrocarbon contaminants, resistance to solvent swelling and resistance to CO₂ plasticization. However, it says nothing about the permeate being selective for CH₄.

In view of the state of the art, the person skilled in the art can verify that no document discloses the process of separating CO₂ from natural gas by using an inverted membrane, such as the present invention, which aims at reducing the equipment and energy costs associated with this gas treatment process for generating fuel in the SPU (Stationary Production Unit).

### SUMMARY OF THE INVENTION

The objective of the present invention is to separate CO₂ from natural gas by using a membrane with selectivity for CH₄ to the detriment of CO₂. In this way, the operation with an inverted membrane produces a permeate "poor in CO₂", which will be used as fuel gas, thus reducing the energy demand of the CO₂ reinjection system, since the CO₂-rich stream will continue at a high pressure.

### BRIEF DESCRIPTION OF THE FIGURES

In order to make the invention easier to understand, the Figures numbered 1 to 3, which accompany this specification and are an integral part thereof, are presented by way of illustration, but without the intention of limiting the invention.
Figure 1 illustrates the simplified diagram of the CO₂ removal system of the state of the art.
Figure 2 illustrates the simplified diagram of the gas compression system after the membranes of the state of the art.

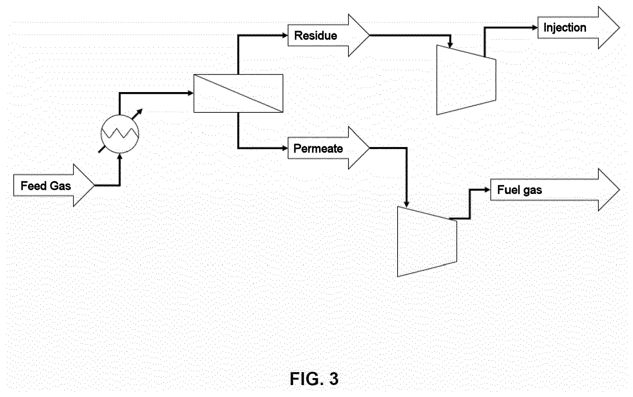

Figure 3 illustrates the simplified diagram of the gas compression system after the reverse membrane process.

### DETAILED DESCRIPTION OF THE INVENTION

The present invention relates to a process for separating CO₂ from natural gas by using inverted membranes. Inverted membranes are those produced in such a way that the permeance to methane is greater than the permeance to CO₂, that is, the selectivity for methane (CH₄) in relation to carbon dioxide (CO₂) is greater than 1. In this way, the treated gas stream will be the permeate, unlike what occurs with the state-of-the-art membrane, in which the gas of interest is in the retentate, hence the name inverted membrane. The membrane includes a polymeric, inorganic or mixed matrix material, and may be in the form of hollow or flat fibers.

An example of inorganic membranes is alumina membranes, which have predominantly Knudsen-type transport mechanisms, whose diffusion coefficient is inversely proportional to the square root of the molecular weight. Thus, for an alumina membrane, methane, because it has a lower molecular weight than CO₂, has a higher diffusion coefficient, which guarantees greater permeability through the membrane. Thus, the CH₄/CO₂ selectivity is greater than 1, which enables its application in a reverse membrane process for CH₄ separation.

In this way, the present invention describes a process for separating CO₂ from natural gas comprising the steps of:
- feeding a gas stream consisting of natural gas to a gas separation unit comprising one or more membranes in series or in parallel having a selective layer, in which it is more selective for methane to the detriment of carbon dioxide; wherein the flow rate of the feed stream comprises a composition of 60 to 90% CO₂ and flow rate of 4 to 12 MMSCMD and is operating at a feed pressure condition of 40 bar (4000 kPa) to 60 bar (6000 kPa);
- removing the permeate stream enriched with methane compared to the feed gas at a permeate pressure of 4 bar (400 kPa) to 16 bar (1600 kPa).
- removing the retentate stream enriched with carbon dioxide compared to the feed gas at a retentate pressure of 40 bar (4000 kPa) to 60 bar (6000 kPa);
wherein one or more membranes of the separation unit are made of a polymeric, inorganic or mixed matrix material. As a result of the use of the inverted membrane in the present process, the composition of the permeate stream comprises 8% CO₂, 90% CH₄ and a flow rate of 0.73 MMSCMD and the composition of the retentate stream comprises 67% CO₂, 23.9% CH₄ and a flow rate of 5.27 MMSCMD. The composition of the permeate stream contains up to 20% CO₂, which allows it to be burned in the turbines.

In this way, unlike the state of the art, the operation with an inverted membrane produces a permeate that is "poor in CO₂", which will be used as fuel gas, thus reducing the energy demand of the CO₂ reinjection system, since the CO₂-rich stream will remain at a high pressure. Therefore, the permeate gas stream is directed to the fuel gas system, and the retained gas stream is directed to the gas injection system.

The nominal capacity of the separation and compression equipment is represented by the gas flow rate sent to this equipment. In this way, reducing the gas flow rate means reducing the capacity and, consequently, the costs of this equipment. The inverted membrane process will reduce the flow rate of the low-pressure gas stream, which is generated in all membrane separation processes. This effect is amplified when the gas to be treated has CO₂ contents above 60% molar. In this scenario, the conventional membrane produces a permeate flow rate 50% higher than that obtained with the inverted membrane process.

The use of the inverted membrane allows for an estimated 30% reduction in flow rate compared to the use of the conventional membrane, which may be greater depending on the CO₂ concentration, which leads to a 30% reduction in compression electrical consumption and a 20% reduction in the CAPEX of the compression and CO₂ removal systems.

Therefore, the inverted membrane would potentially minimize the recompression stream and the energy consumption of the fuel gas generation system of oil and natural gas production units, when compared to the current membranes.

### EXAMPLES

Those skilled in the art will value the knowledge presented herein and will be able to reproduce the invention in the presented embodiments and in other variants, encompassed by the scope of the attached claims. In this way, there follows an example describing the experimental procedures used.

To generate results, a natural gas stream with a composition of approximately 60% CO₂ and a flow rate of 6 MMSCMD was tested. From this stream, it would be necessary to produce approximately 0.73 MMSCMD of fuel gas with less than 10% CO₂.

Table 1 shows the flow rates of the permeate (rich in CO₂) and retentate (poor in CO₂) streams obtained in this fuel gas production scenario with current membranes. Under these conditions, the fuel gas is the retentate stream and the permeate must be compressed and directed to the gas injection system.

The inverted membrane was simulated considering that the same would have the CO₂ permeability value inverted with the CH₄ permeability of a cellulose acetate membrane, for example. For the coherence, the same relative permeability to CH₄ was maintained for the other hydrocarbons.

Table 1 further presents the flow rates of the permeate and retentate streams obtained in the previous fuel gas production scenario, but using inverted membranes. Under these conditions, the fuel gas is the permeate stream, which must be compressed and directed to the fuel gas system.

**Table 1 - Expected flow rates**

| | Current membrane | Inverted membrane |
|---|---|---|
| Feed flow rate [MMSCMD] | 1.86 | 6.00 |
| Permeate [MMSCMD] | 1.13 | 0.73 |
| Retentate [MMSCMD] | 0.73 | 5.27 |
| Permeation area [m²] | 32,000 | 20,000 |

The following conditions were used:
- Feed pressure - 50 bar (5000 kPa);
- Permeate pressure - 4 bar (400 kPa); and
- Retentate pressure - 48 bar (4800 kPa).

In addition to the results above, Table 2 presents the compositions of the feed and output streams of the current and inverted membranes.

**Table 2 - Stream composition**

| | | Current membrane | | Inverted membrane | |
|---|---|---|---|---|---|
| | Feed | Permeate | Retained | Permeate | Retained |
| Components | molar % | molar % | molar % | molar % | molar % |
| CO₂ | 60.00 | 93.44 | 8.46 | 8.10 | 67.21 |
| CH₄ | 32.00 | 6.46 | 71.35 | 90.29 | 23.90 |
| N₂ | 0.00 | 0.00 | 0.00 | 0.00 | 0.00 |
| H₂S | 0.00 | 0.00 | 0.00 | 0.00 | 0.00 |
| H₂O | 0.00 | 0.00 | 0.00 | 0.00 | 0.00 |
| Ethane (C₂) | 3.80 | 0.08 | 9.53 | 1.45 | 4.13 |
| Propane (C₃) | 2.20 | 0.00 | 5.58 | 0.09 | 2.49 |
| i-Butane (C₄) | 0.30 | 0.00 | 0.76 | 0.01 | 0.34 |
| n-Butane (C₄) | 0.10 | 0.00 | 0.25 | 0.00 | 0.11 |
| C5+ | 1.60 | 0.00 | 4.06 | 0.06 | 1.81 |

Thus, as the inverted membrane leads to a lower permeate flow rate, the present invention allows:
- Reduction of separation equipment;
- Reduction of compression equipment;
- Lower energy consumption during service;
- Lower greenhouse gas emissions.

## Claims

1. **A PROCESS FOR SEPARATING CO₂ FROM NATURAL GAS, characterized in that** it comprises the steps:
- feeding a gas stream consisting of natural gas to a gas separation unit comprising one or more membranes in series or in parallel having a selective layer, in which it is more selective for methane to the detriment of carbon dioxide; wherein the flow rate of the feed stream comprises a composition of 60% to 90% CO₂ and flow rate of 4 to 12 MMSCMD and is operating at a feed pressure condition of 40 bar (4000 kPa) to 60 bar (6000 kPa);
- removing the permeate stream enriched with methane compared to the feed gas at a permeate pressure of 4 bar (400 kPa) to 16 bar (1600 kPa);
- removing the retentate stream enriched with carbon dioxide compared to the feed gas at a retentate pressure of 40 bar (4000 kPa) to 60 bar (6000 kPa);
wherein one or more membranes of the separation unit are made of a polymeric, inorganic or mixed matrix material.

2. **THE PROCESS** according to claim 1, **characterized in that** the permeate gas stream is directed to the fuel gas system and the retained gas stream is directed to the gas injection system.

3. **THE PROCESS** according to claim 1, **characterized in that** the composition of the permeate stream has up to 20% CO₂ resulting in its burning inside the turbines.
